Europäisches Patentamt

European Patent Office

Office européen des brevets

(11) Publication number: **0 258 449 B1**

# EUROPEAN PATENT SPECIFICATION

(45) Date of publication of patent specification: **21.10.92** (51) Int. Cl.⁵: **H02N 2/00**

(21) Application number: **87901637.6**

(22) Date of filing: **17.02.87**

(86) International application number:
**PCT/JP87/00102**

(87) International publication number:
**WO 87/05166 (27.08.87 87/19)**

(54) **ULTRASONIC MOTOR.**

(30) Priority: **18.02.86 JP 34624/86**
**20.02.86 JP 35954/86**
**20.02.86 JP 35959/86**
**20.02.86 JP 35960/86**
**20.02.86 JP 35962/86**
**20.02.86 JP 35963/86**

(43) Date of publication of application:
**09.03.88 Bulletin 88/10**

(45) Publication of the grant of the patent:
**21.10.92 Bulletin 92/43**

(84) Designated Contracting States:
**DE FR GB**

(56) References cited:
**JP-A-59 117 473**
**JP-A-59 178 988**
**US-A-45 623 74**

**No relevant documents have been disclosed.**

(73) Proprietor: **MATSUSHITA ELECTRIC INDUSTRIAL CO., LTD.**
**1006, Oaza Kadoma**
**Kadoma-shi, Osaka-fu, 571(JP)**

(72) Inventor: **KAWASAKI, Osamu 12-1, Matsuigaoka 3-chome**
**Tanabe-cho, Tsuzuki-gun**
**Kyoto-fu 610-03(JP)**
Inventor: **INABA, Ritsuo 19-7, Uzumasa Higashigaoka**
**Neyagawa-shi**
**Osaka-fu 572(JP)**
Inventor: **TOKUSHIMA, Akira 97-6, Daigo Ooji-cho**
**Fushimi-ku, Kyoto-shi**
**Kyoto-fu 601-13(JP)**
Inventor: **TAKEDA, Katsu 11-3, Ooimazato Nishi 2-chome**
**Higashinari-ku, Osaka-shi**
**Osaka-fu 537(JP)**

(74) Representative: **Dr. Elisabeth Jung Dr. Jürgen Schirdewahn Dipl.-Ing. Claus Gernhardt P.O. Box 40 14 68 Clemensstrasse 30 W-8000 München 40(DE)**

## Description

The present invention relates to an ultrasonic motor wherein the driving force is given by an elastic travelling wave excited by a piezoelectric element.

An ultrasonic motor is constituted by a vibrating stator which comprises a piezoelectric element, and an elastic element and a rotor which is disposed to touch the vibrating stator with pressure. For instance, US-A-4 562 374 discloses an ultrasonic motor having two driving electrodes with respective electrode groups comprising small electrodes having a circumferential length of one half wavelength. These electrodes are arranged in such a manner that a positional shift of one quarter of the wavelength to each other corresponding to a phase difference of 90° is provided. By applying voltages having phase differences of 90° from each other to the respective driving electrodes, an elastic travelling wave is generated. Other examples of this ultrasonic motor comprise plural small electrodes of one quarter wavelength which are provided in such a manner that they are interdigitated with each other, plural of them being electrically connected with each other. Further embodiments of this ultrasonic motor are provided with driving electrodes comprising such plural electrodes each having a length of one half wavelength, which are formed in the respective piezoelectric members. The piezoelectric members are disposed with a positional shift of one quarter of the wavelength to each other. The elastic travelling wave is generated by applying voltages having a phase difference of 90° from each other with respect to the driving electrodes. Generally, the vibrating stator is ring-shaped or bar-shaped.

The travelling wave is represented as follows:

$$\xi = \xi_0 \cos(\omega t - kx)$$
$$= \xi_0 (\cos(\omega t)\cos(kx) + \sin(\omega t)\sin(kx)) \qquad (1)$$

where:
-  $\xi$   amplitude of travelling wave,
-  $\xi_0$   instantaneous value of amplitude,
-  $\omega$   angular frequency,
-  t   time,
-  k   wave number,
-  x   position.

When the ring-shaped vibrating stator is used, the area of the piezoelectric element responding to one electrode-group is small, because the width in the radial direction is narrow and two electrode-groups are disposed to divide regions in the circumferential direction. Therefore, the driving force for exciting vibrations of one phase is not sufficient, and it is accordingly difficult to obtain a high driving efficiency.

Another embodiment of a vibrating stator for an ultrasonic motor is e.g. disclosed in Japanese Unexamined Published Application Sho 60-183982, which is constituted by bonding an elastic element and two slices of a piezoelectric element coaxially into three layers. These two slices of the piezoelectric element are disk-shaped. Voltage is individually applied to each of the piezoelectric elements and they are superimposed in such a manner that the phases of the excited vibration differ by 90°. Therefore, the area of the piezoelectric element which supplies the driving force for excitation is large, and its efficiency is high.

However, since the impedances seen from electric terminals of the two slices of the piezoelectric elements are different, when they are driven by voltages of the same amplitude and phases different of 90°, not only the travelling wave but also standing waves are excited in the vibrating stator as is obvious from equation (1). The generation of these standing waves causes lowering of the driving efficiency of the ultrasonic motor.

Another embodiment of the vibrating stator, of the above-mentioned Japanese Unexamined Published Application Sho 60-183982 comprises the elastic element and a slice of piezoelectric element and forms concentric circle-shaped electrodes comprising two regions on one of the slices of the piezoelectric element. Different phase vibrations are excited by the voltages which are applied to the electrodes. Since this vibrating stator also does not provide matching of the impedances of the two electrode-groups having a phase difference of 90° and the signals of the electric charge excited by the vibration are not taken into account, when the vibrating stator is driven by the same amplitudes and phases different of 90°, not only the travelling wave but also standing waves are excited in the vibrating stator.

US-A-4 484 099 discloses a rotor which is driven by two concentric vibration members which are independent from each other. Electrostrictive elements are bonded to the vibration members and each comprises a plurality of small electrostrictive elements which are disposed at regular intervals of $\lambda/2$. The electrostrictive elements are phase-differentially arranged at a mutual pitch of $(n_0 + 1/4) \lambda$, where $n_0 = 0, 1, 2, 3...$ Standing waves are generated in the respective electrostrictive elements and they are superimposed on each other to thereby obtain a travelling wave. The rotor is driven by these two vibration members at respective driving frequencies f, which may be the same or different. In the first case only one driving voltage source is needed. In short, this ultrasonic motor comprises vibrating stators which are disposed in a concentric relation to each other. However, each of the vibrating stators is independent concerning the construction and it is individually able to excite the elastic travelling wave.

The object underlying the present invention is to provide an ultrasonic motor which obtains a high efficiency by optimizing two sets of electrode-groups having different phases in position.

This object is solved by an ultrasonic motor having the features of claim 1. Advantageous examples of the ultrasonic motor according to the invention are subject of the dependent claims.

The ultrasonic motor according to the invention comprises electrodes which are disposed in the form of two sets of concentric circles on the surface of the piezoelectric element, which constitutes one disk-shaped vibration body as a whole. In the disk-shaped vibration body flexural vibrations of high order are excited. These flexural vibrations are of the second order in the radial direction and of the third order in the circumferential direction with a nodal circle where the vibration displacement is zero. The signs of the electric charge are opposite inside and outside of the nodal circle. This polarity change of the electric charge is used according to the invention in order to improve the efficiency of vibration excitation.

The invention is further described by means of several embodiments and of the drawings.

In the drawings:

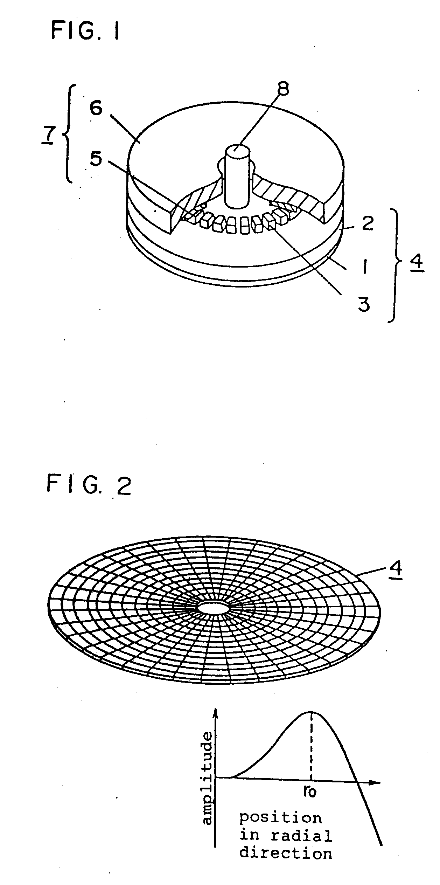

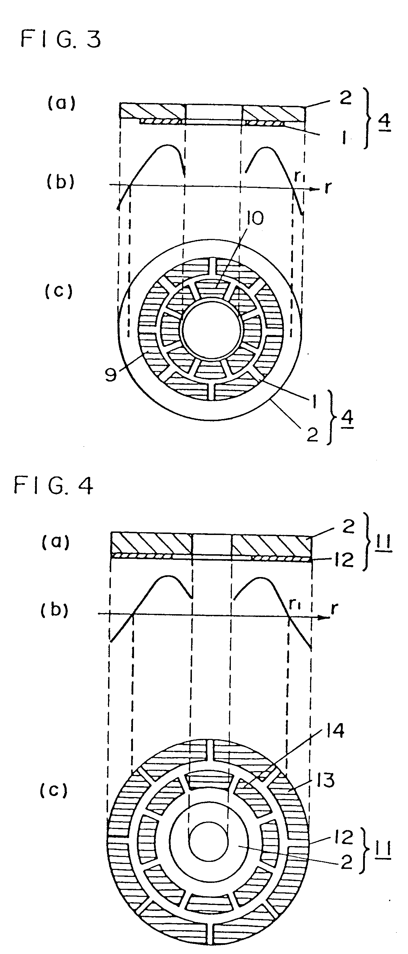

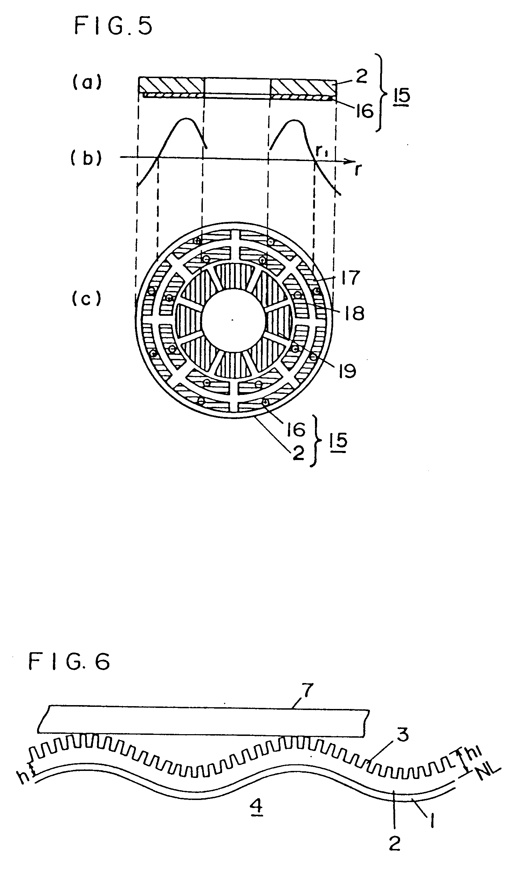

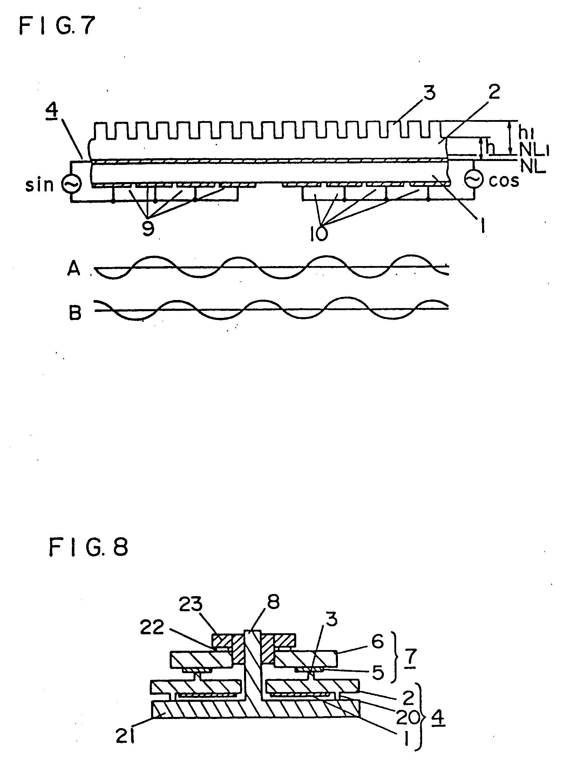

FIG.1 is a partially cut-out perspective view of an embodiment of a disk type ultrasonic motor in accordance with the present invention; FIG.2 is a perspective view for explaining the operation of the embodiment of FIG.1; FIG.3(a), (b) and (c) are cross sectional views of the vibrating stator of the embodiment of FIG.1, a displacement distribution graph of the same and a plane view showing the constitution of the electrodes of the same, respectively; FIG.4(a), (b) and (c) are cross sectional views of a vibrating stator of a disk type ultrasonic motor of another embodiment, a displacement distribution graph of the same and a plane view showing the constitution of the electrodes of the same, respectively; FIG.5(a), (b) and (c) are cross sectional views of a vibrating stator of a disk type ultrasonic motor of another embodiment, a displacement distribution graph of the same and a plane view showing the constitution of the electrodes of the same, respectively; FIG.6 is a cross sectional view showing the operation of the main part of the vibrating stator of an embodiment in accordance with the present invention; FIG.7 is a cross sectional view showing the driving state of the main part of the vibrating stator of an embodiment in accordance with the present invention; and FIG.8 is a cross sectional view of the ultrasonic motor of a more concrete embodiment in accordance with the present invention.

In the following, an embodiment of the present invention is explained in detail in compliance with the drawings.

FIG.1 is a cut-out perspective view of a disk type ultrasonic motor. In the figure, 1 is a piezoelectric element of a piezoelectric ceramic etc., 2 is an elastic element of an iron or aluminium etc.. 3 are projections which are for taking mechanical outputs and are disposed on the surface of the elastic element 2. The piezoelectric element 1 and the elastic element 2 are bonded concentrically thereby to constitute the vibrating stator 4. 5 is an wear-resistive frictional material, 6 is an elastic element, and the rotor 7 is constituted by bonding them together. The projections 3 which are disposed on the vibrating stator 4 and the rotor 7 are in pressure contact pressure with the frictional material 5 therebetween. When a driving voltage is applied to the piezoelectric element 1, an elastic travelling wave is excited in the vibrating stator 4, and is amplified mechanically by the projections 3. Thereby the rotor 7 is driven by friction forces via the frictional material 5. The rotor 7 rotates around a rotation shaft 8.

FIG.2 is a figure of a vibration mode and an amplitude distribution in the radial direction of the above-mentioned vibrating stator 4. The vibration mode shown in the figure adopts a flexural vibration mode of the second order in the radial direction and of the third order in the circumferential direction. Since at least three vibrating loops are required for holding the rotor 7, the flexural vibration modes of the second order or higher in the radial direction and of the third order or higher in the circumferential direction are applicable similarly. In the figure, $r_0$ is the position which is a loop of the flexural vibration where the amplitude is maximum. Since the rotation speed of the rotor of the ultrasonic motor is proportional to the vibrating amplitude of the vibrating stator, the maximum rotation speed can be obtained by setting the rotor to touch the loop of vibrations. Therefore, the projections 3 are normally disposed in this position.

FIG.3 shows the displacement distribution graph of the vibrating stator 4 and the constitution of the electrode of the piezoelectric element 1 for the disk type ultrasonic motor shown in FIG.1. The electrode-groups A 9 and B 10 are constituted concentrically within a nodal circle of flexural vibrations of the vibrating stator 4, and they consist of small electrode-groups, wherein the circumferential direction lengths correspond to half wavelengths of the elastic travelling wave, respectively. The electrode-groups A 9 and B 10 are disposed with a phase difference of 90° in the location in the circumferential direction. An electrode on the surface which is opposite to the surface shown in the figure is a flat electrode. The polarization directions of the small electrode parts which form the electrode groups A 9 and B 10 and are adjacent to each other are reversed in the thickness direction. When used, the electrode groups A 9 and B 10 are short-circuited, respectively, and alternating voltages with different in phases by 90° are applied thereto, respectively, so that the flexural vibration which travels in the circumferential direction is excited. Then, if respective electrode areas are designed with respect to the widths in the radial direction so as to make induced electric charges in the electrode-groups A 9 and B 10 by the above-mentioned flexural vibration equal (i.e. by making mechanical impedances equal), a standing wave having the same amplitude can be excited by a driving voltage of the same amplitude, and the travelling wave can be excited efficiently by equation (1).

FIG.4 shows the displacement distribution of a vibration stator 11 and the electrode configuration of a piezoelectric element 12 in another embodiment of an ultrasonic motor of the present invention. Electrode-group $A_1$ 13 is disposed outside a nodal circle of the flexural vibrations of the vibrating stator 4, and the electrode-group $B_1$ 14 is disposed inside the nodal circle. Each electrode is constituted concentrically, and comprises small electrodes, wherein the length in the circumferential direction corresponds to a half wavelength of the elastic travelling wave, respectively. The electrodes $A_1$ 13 and $B_1$ 14 are disposed with a phase difference of 90° in position in the circumferential direction. An electrode on the surface which is opposite to the surface shown in that figure is a flat electrode. The polarization directions of the small electrode parts which are adjacent to each other form the electrode-groups $A_1$ 13 and $B_1$ 14 are opposite with respect to the thickness direction. When used, the electrode-groups $A_1$ 13 and $B_1$ 14 are short-circuited, respectively, and alternating voltages with a phase difference by 90° are applied thereto, respectively, so that the flexural vibration which travels in circumferential direction is excited. Then, if the respective electrode areas are designed so as to make the electric charges induced in the electrode groups $A_1$ 13 and $B_1$ 14 by the above-mentioned flexural vibration equal (i.e. by making mechanical impedances equal), an elastic travelling wave having the same amplitude can be excited by the same driving voltage, and the travelling wave can be excited efficiently as shown by equation (1). Now, the electric charge which is induced in a small electrode of the electrode-group $A_1$ 13 in FIG.4 and the electric charge which is induced in a corresponding small electrode of the electrode-group A 9 in FIG.3 are opposite in signs thereof. Therefore, if the amplitudes of driving voltages are equal, the rotating directions of the rotors are reverse.

FIG.5 shows the displacement distribution of a vibrating element 15 and the electrode configuration of a piezoelectric element 16 in a further embodiment of an ultrasonic motor of the present invention. Electrode group $A_2$ 17 is disposed outside a nodal circle of flexural vibration of the vibrating stator 4, and electrode groups $A_3$ 18 and $B_2$ 19 are disposed inside the nodal circle. The three electrode-groups are constituted concentrically, and comprise small electrodes, wherein the length in the circumferential direction corresponds to a half wavelength of the elastic travelling wave. The electrode groups $A_2$ 17 and $A_3$ 18 are disposed with the same phase in position in the circumferential direction, and the electrode groups $A_3$ 18 and $B_2$ 19 are disposed with a phase difference of 90° in position in the circumferential direction. An electrode on the surface which is opposite to the surface shown in that figure is a flat electrode. The polarization directions of the small electrode parts adjacent each other and forming the electrode groups $A_2$ 17, $A_3$ 18 and $B_2$ 19 are opposite with respect to the thickness direction. The signs of the electric charges which are induced in the corresponding small electrodes in the electrode groups $A_2$ 17 and $A_3$ 18 are opposite to each other when the directions of polarization are the same, and therefore, the directions of polarization are made opposite as shown in that figure. Therefore, when used, the electrode groups $A_2$ 17, $A_3$ 18 and $B_2$ 19 are short-circuited, respectively, and alternating voltages with phase differences of 90° are applied thereto, respectively, so that the flexural vibration which travels in the circumferential direction is excited.

Now, the respective electrode areas are designed so as to make the sum of the electric charges in the electrode groups $A_2$ 17 and $A_3$ 18 and the electric charge in the electrode group $B_2$ 19 by the above-mentioned flexural vibration equal (i.e. by making mechanical impedances equal), a standing wave having the same amplitude can be excited by the driving voltage of the same amplitude, and the travelling wave can be efficiently excited as shown by the equation (1). By this embodiment, since the electrodes can be constituted on the whole disk surface of the vibrating stator, an ultrasonic motor capable of producing a large power is obtainable. Further, although the electrode groups $A_2$ 17 and $A_3$ 18 are used with the same phase, the electrode groups $A_2$ 17 and $B_2$ 19 can be used similary with the same phase.

In the above-mentioned embodiment, although only the mechanical impedances are made equal in two driving electrode groups, if the electrical impedances are also made equal, the elastic travelling wave can further be excited efficiently by driving voltages which have the same amplitude and have a phase difference of 90°.

FIG.6 is a cross sectional view of the vibrating stator 4 in the circumferential direction for explaining the use of the projections 3. In the figure, NL is the neutral line of the flexural vibration of the vibrating stator 4, h is the distance from the neutral line NL to a surface of the vibrating stator 4, and the speed of the rotor 7 is in proportion to the amplitude of the travelling wave of the flexural vibration and the distance h. Therefore, to make the speed of the rotor 7 high, the amplitude of the flexural vibration or the distance h should be made large. However, since the upper limit of the flexural vibration is determined by a fracture limit of the piezoelectric element 1, when a further increase of the rotating speed is intended the distance h between the neutral line NL and the surface of the vibrating stator 4 should be made large. In the example shown in that figure, to make the distance h large without making the flexural rigidity of the flexural vibration in the travelling direction large, the projections 3 are provided; consequently, the distance h is enlarged to $h_1$ without largely changing the neutral line NL. The speed of the rotor 7 increases $h_1/h$ times in comparison with the case having no projections 3.

FIG.7 is a figure showing a simplified cross-sectional view of the projections and the vibrating stator for showing two sets of standing waves for explaining the positioning regulation and numeral restriction of the projections . As afore-described, although two electrode-groups which have phase difference of 90° in position are disposed concentrically, here, to make the operation easy to understand they are drawn as being on the same line. That is to say, the electrode groups A and B comprise a small electrode which corresponds to a half wavelength of the travelling wave, and they are short-circuited at the time of driving as shown in the figure, respectively, and they are driven by voltages having a phase difference of 90° of time (for example a sine wave and a cosine wave), respectively. The waves which are drawn below the vibrating stator 4 show standing waves of the flexural vibration excited by the electrode groups A and B. In the projections 3 of the elastic element 2, the thickness of the elastic element becomes equivalently thick, and thereby the flexural rigidity becomes large. When the loops of the standing waves of the flexural vibration which are excited by the electrode groups A and B, come to the part of the projections, the flexural vibration becomes difficult to be excited; therefore, to drive efficiently, there should be no projections 3 at the loops of both standing waves. Further, by making the relations of positions of the projections 3 seen from the two standing waves constant, the mechanical impedances seen from the two driving terminals can be made equal, so that the number of the projections within one wavelength becomes a multiple of four by the restrictions. This is also the condition which can make the relations of positions of the projections seen from all small electrodes constant. This figure shows the relations of positions between the two standing waves and the projections at a time when this condition was satisfied.

NL of FIG.7 is a neutral line before providing of the projections 3, h is the distance to the surface of the elastic element from a neutral line NL, $NL_1$ is the neutral line after providing the projections 3, $h_1$ is the distance to the surface of the elastic element from a neutral line $NL_1$, and, an increase of distance to the surface of the elastic element from the neutral line $NL_1$ is larger than a change of position of the neutral line, so that an increase of the rotation speed is obtainable. Then, when the resonance frequency of the vibrating stator 4 is close to that of the projective element 3, the projections 3 move independently, so that the resonance frequency of the projections 3 must be made sufficiently lower than the resonance frequency of the vibrating stator 4.

FIG.8 is a cross-sectional view of an ultrasonic motor which shows an embodiment of a position-fixing of the vibrating stator. Projections 20 are disposed on a nodal of vibration of the vibrating stator 4, and the vibrating stator 4 is fixed on a fixed stand 21 via the projections 20. 22 is a leaf spring for putting the rotor 7 in pressure contact with the vibrating stator 4 , which is held by a hearing 23. When the travelling wave of the flexural vibration is excited in the vibrating stator 4, the rotor 7 is driven by friction forces, thereby to rotate around the rotation shaft 8. The position-fixing of the vibrating stator 4 can also be made via an internal circumference of the vibrating stator 4 where the amplitude of vibration becomes small.

According to the present invention, an ultrasonic motor having high efficiency is obtainable, and a motor is very suitable for the requirements of compact size and high efficiency, for instance, for lens-driving of a video camera or driving motor of a printer etc., can be offered.

LIST OF REFERENCE NUMERALS FOR FIGURES

| | |
|---|---|
| 1 | piezoelectric element |
| 2 | elastic element |
| 3 | projections |
| 4 | vibrating stator |
| 5 | frictional material |
| 6 | elastic element |
| 7 | rotor |
| 8 | rotation shaft |
| 9 | electrode - group A |
| 10 | electrode - group B |

| 11 | vibrating stator |
| 12 | piezoelectric element |
| 13 | electrode - group A1 |
| 14 | electrode - group B1 |
| 15 | vibrating stator |
| 16 | piezoelectric element |
| 17 | electrode - group A2 |
| 18 | electrode - group A3 |
| 19 | electrode - group B2 |
| 20 | projections |
| 21 | fixing stand |
| 22 | leaf spring |
| 23 | bearing |

## Claims

1. An ultrasonic motor comprising
   - a vibrating stator (4) including an elastic element (2) and a piezoelectric element (1; 12; 16) fixed to the elastic element;
   - a plurality of driving electrodes (9, 10; 13, 14; 17, 18, 19) which are provided on the piezoelectric element (1; 12; 16), the driving electrodes comprising at least two electrode groups; and
   - a rotor (7) which is in contact with the vibrating stator,
     **characterised** in that
   - both the elastic element (2) and the piezoelectric element (1; 12; 16) are disk-shaped, and the electrode groups are disposed in concentric alignment with each other in such a manner that the electrode groups are disposed outside and inside of a nodal circle of flexural vibrations generated in the vibrating stator and
   - each of the electrode groups comprises plural small electrodes each having a circumferential length which corresponds to one-half wavelength of a travelling wave of the flexural vibration.

2. The ultrasonic motor in accordance with claim 1, wherein the driving electrodes (9, 10) include two electrode groups disposed concentrically to each other within the nodal circle.

3. The ultrasonic motor in accordance with claim 1, wherein one electrode group of the driving electrodes (14) is disposed inside of the nodal circle and the other electrode group of the driving electrodes (13) is disposed outside of the nodal circle.

4. The ultrasonic motor in accordance with claim 1, wherein the driving electrodes include three electrode groups, two groups of which (18, 19) are disposed inside of the nodal circle and the reminder of which (17) is disposed outside of the nodal circle to be connected to one of the other two groups of electrodes (18, 19).

5. The ultrasonic motor in accorcance with any of claims 1 to 4, wherein the vibrating stator (4) is fixed in position with respect to the nodal circle or an internal circumference of the vibrating stator.

6. The ultrasonic motor in accordance with any of claims 1 to 5, wherein the vibrating stator (4) has projections (3) which make contact with the rotor (7) at a loop of the flexural vibration.

7. The ultrasonic motor in accordance with claim 6, wherein the number of the projections (3) is a multiple by an integer of four per one wavelength of the travelling wave, and each of the projections (3) is disposed in such a manner to avoid a position where each of two standing waves constituting the travelling wave forms a loop.

8. The ultrasonic motor in accordance with claim 6 or 7, wherein the lowest resonance frequency of the projections (3) is higher than the resonance frequency of the flexural vibration of the vibrating stator (4).

## Patentansprüche

1. Ein Ultraschallmotor mit
   - einem Schwingstator (4) einschließlich eines elastischen Elements (2) und eines piezoelektrischen Elements (1; 12; 16), das an dem elastischen Element befestigt ist;
   - einer Vielzahl von Antriebselektroden (9, 10; 13, 14; 17, 18, 19), die auf dem piezoelektrischen Element (1; 12; 16) vorgesehen sind, wobei die Antriebselektroden wenigstens aus zwei Elektrodengruppen bestehen; und
   - einem Rotor (7), der in Kontakt mit dem Schwingstator steht,
     dadurch gekennzeichnet, daß
   - sowohl das elastische Element (2) als auch das piezoelektrische Element (1; 12; 16) Scheibenform aufweisen, und die Elektrodengruppen in konzentrischer Ausrichtung miteinander angeordnet sind, und zwar so, daß die Elektrodengruppen außerhalb und innerhalb eines Knotenkreises von Biegeschwingungen angeordnet sind, die im Schwingstator generiert werden, und

- jede der Elektrodengruppen eine Mehrzahl kleinerer Elektroden aufweist, deren jede eine Umfangslänge hat, die einer halben Wellenlänge einer Wanderwelle der Biegeschwingung entspricht.

2. Der Ultraschallmotor gemäß Anspruch 1, bei dem die Antriebselektroden (9, 10) zwei Elektrodengruppen beinhalten, die konzentrisch zueinander innerhalb des Knotenkreises angeordnet sind.

3. Der Ultraschallmotor gemäß Anspruch 1, bei dem eine Elektrodengruppe der Antriebselektroden (14) innerhalb des Knotenkreises und die andere Elektrodengruppe der Antriebselektroden (13) außerhalb des Knotenkreises angeordnet ist.

4. Der Ultraschallmotor gemäß Anspruch 1, bei dem die Antriebselektroden drei Elektrodengruppen aufweisen, von denen zwei Gruppen (18, 19) innerhalb des Knotenkreises und der Rest (17) außerhalb des Knotenkreises angeordnet ist und an eine der anderen zwei Elektrodengruppen (18, 19) anzuschließen ist.

5. Der Ultraschallmotor gemäß einem der Ansprüche 1 bis 4, bei dem die Stellung des Schwingstators (4) in bezug auf den Knotenkreis oder einen Innenumfang des Schwingstators fixiert ist.

6. Der Ultraschallmotor gemäß einem beliebigen der Ansprüche 1 bis 5, bei dem der Schwingstator (4) Vorsprünge (3) aufweist, die an einem Schwingungsbauch der Biegeschwingung in Berührung mit dem Rotor (7) stehen.

7. Der Ultraschallmotor gemäß Anspruch 6, bei dem die Anzahl der Vorsprünge (3) ein Vielfaches einer Ganzzahl von vier je Wellenlänge der Wanderwelle beträgt, und jeder Vorsprung (3) so angeordnet ist, daß er eine Stellung vermeidet, in der jede von zwei stehenden Wellen, die die Wanderwelle bilden, einen Schwingungsbauch bildet.

8. Der Ultraschallmotor gemäß Anspruch 6 oder 7, bei dem die niedrigste Resonanzfrequenz der Vorsprünge (3) höher ist als die Resonanzfrequenz der Biegeschwingung des Schwingstators (4).

**Revendications**

1. Moteur ultrasonique comprenant :
   - un stator vibrant (4) comportant un élément élastique (2) et un élément piézoélectrique (1 ; 12 ; 16) fixé à l'élément élastique ;
   - une multitude d'électrodes de commande (9, 10 ; 10, 14 ; 17, 18, 19) qui sont placées sur l'élément piézoélectrique (1 ; 12 ; 16), les électrodes de commande comprenant au moins deux groupes d'électrodes, et
   - un rotor (7) qui est en contact avec le stator vibrant,
   caractérisé en ce que :
   - à la fois l'élément élastique (2) et l'élément piézoélectrique (1 ; 12 ; 16) sont en forme de disque et que les groupes d'électrodes sont disposés en alignement concentrique l'un avec l'autre d'une manière telle que les groupes d'électrodes sont disposés à l'extérieur et à l'intérieur d'un cercle des noeuds des vibrations de flexion produites dans le stator vibrant, et
   - chacun des groupes d'électrodes comprend de multiples petites électrodes, chacune ayant une longueur circonférentielle qui correspond à une demie longueur d'onde d'une onde progressive de la vibration de flexion.

2. Moteur ultrasonique selon la revendication 1, dans lequel les électrodes de commande (9, 10) comportent deux groupes d'électrodes disposés concentriquement l'un par rapport à l'autre à l'intérieur du cercle des noeuds.

3. Moteur ultrasonique selon la revendication 1, dans lequel un premier groupe d'électrodes des électrodes de commande (14) est disposé à l'intérieur du cercle des noeuds et l'autre groupe d'électrodes des électrodes de commande (13) est disposé à l'extérieur du cercle des noeuds.

4. Moteur ultrasonique selon la revendication 1, dans lequel les électrodes de commande comportent trois groupes d'électrodes, dont deux groupes (18, 19) sont disposés à l'intérieur du cercle des noeuds et dont le dernier (17) est disposé à l'intérieur du cercle des noeuds pour être connecté à un des deux autres groupes d'électrodes (18, 19).

5. Moteur ultrasonique selon l'une quelconque des revendications 1 à 4, dans lequel le stator vibrant (4) est fixé en position par rapport au cercle des noeuds ou à une circonférence interne du stator vibrant.

6. Moteur ultrasonique selon l'une quelconque des revendications 1 à 5, dans lequel le stator vibrant (4) comporte des saillies (3) qui établissent un contact avec le rotor (7) à un ventre de la vibration de flexion.

7. Moteur ultrasonique selon la revendication 6, dans lequel la nombre de saillies (3) est un multiple d'un nombre entier de quatre d'une première longueur d'onde de l'onde progressive, et chacune des saillies (3) est disposée de manière telle à éviter une position où chacune des deux ondes stationnaires constituant l'onde progressive constitue un ventre.

8. Moteur ultrasonique selon la revendication 6 ou 7, dans lequel la fréquence de résonance la plus basse des saillies (3) est supérieure à la fréquence de résonance de la vibration de flexion du stator vibrant (4).

FIG. 1

FIG. 2

amplitude

$r_0$

position
in radial
direction

FIG. 3

(a)

(b)

(c)

FIG. 4

(a)

(b)

(c)

FIG.5

(a)

2

16

15

(b)

r₁

r

(c)

17

18

19

16

2

15

FIG. 6

7

3

h

Th

NL

4

2

I

## F I G. 7

## F I G. 8